Europäisches Patentamt

European Patent Office

Office européen des brevets

(11) Veröffentlichungsnummer: **0 333 087**
A2

## EUROPÄISCHE PATENTANMELDUNG

(21) Anmeldenummer: 89104377.0

(51) Int. Cl.⁴: **B60R 13/04**

(22) Anmeldetag: **13.03.89**

(30) Priorität: **17.03.88 DE 8803633 U**

(43) Veröffentlichungstag der Anmeldung:
**20.09.89 Patentblatt 89/38**

(84) Benannte Vertragsstaaten:
**DE ES FR GB IT SE**

(71) Anmelder: **REBO-PLASTIK GMBH & CO.KG
Industriestrasse 3
DE-4925 Kalletal 1 - Erder(DE)**

(72) Erfinder: **Berkenkamp, Wolfgang
Schulstrasse 76,
D-4970 Bad Oeynhausen,(DE)**
Erfinder: **Reckermann, Hans-Dieter,
Salzuflener Strasse 184,
D-4973 Vlotho,(DE)**

(74) Vertreter: **Patentanwälte Dr. Solf & Zapf
Schlossbleiche 20 Postfach 13 01 13
D-5600 Wuppertal 1(DE)**

(54) **Tiefzieh-Formelement.**

(57) Tiefzieh-Formelement mit Optik-Struktur, bestehend aus einem einlagigen Profilkörper (2), in dessen Rückseite, von dieser aus gesehen, die Optik-Struktur als Negativprofil ausgebildet sowie die Rückseite des Profilkörpers (2) mit einem Kontrastlack beschichtet ist.

FIG.1

## Tiefzieh-Formelement

Die vorliegende Erfindung betrifft ein Tiefzieh-Formelement mit Optik-Struktur.

Derartige Formelemente werden z. B. als Kraftfahrzeugverkleidungsteile hergestellt, die zwischen den Rückleuchten des Kraftfahrzeuges befestigt werden und optisch die Rückleuchten über die gesamte Kraftfahrzeugheckbreite verlängern. Hierbei ist aber ein gegenüber den Heckleuchten wesentlich reduziertes Reflexionsverhalten vorgeschrieben. Diese Verkleidungs-Formelemente besitzen eine innere Optik, d. h. eine innere Struktur aus Vertiefungen bwz. Erhebungen, die der Optik der Kraftfahrzeugleuchtengläser nahekommt. Diese bekannten Formelemente werden aus Kostengründen im Tiefzieh-Verfahren hergestellt, wobei eine zweischalige Bauform gegeben ist. Die innere Schale besteht hierbei aus einem Profilkörper, in dessen der äußeren Schale zugekehrten Oberfläche die Optik-Struktur als Positiv-Struktur eingeformt ist. Die strukturierte Oberfläche ist mit einem Kontrastlack beschichtet. Weiterhin ist eine äußere Schale aus transparentem Material vorgesehen, die eine homogene innere Struktur aufweist und auf der inneren Schale ohne Zwischenraum aufliegt. Diese bekannten Formelemente besitzen zwar ein zufriedenstellendes, optisches Aussehen, jedoch ist ihre Herstellung aufgrund der Zweischalenbauweise relativ aufwendig und teuer.

Der Erfindung liegt die Aufgabe zugrunde, ein Tiefzieh-Element mit Optik-Struktur zu schaffen, das bei gleicher optischer Qualität wie die zweischaligen Elemente kostengünstiger herstellbar ist und ein geringeres Gewicht bei guter Formsteifigkeit aufweist. Erfindungsgemäß wird dies mit einem einlagigen Profilkörper erreicht, in dessen Rückseite von dieser aus gesehen, die Optik-Struktur als Negativprofil ausgebildet sowie die Rückseite des Profilkörpers mit einem Kontrastlack beschichtet ist.

Durch diese erfindungsgemäße Ausgestaltung wird ein optischer Effekt erzielt, der dem der zweischaligen Formelemente entspricht und sogar übertrifft, obwohl die Optik-Struktur im Gegensatz zu den bekannten Formelementen und auch im Gegensatz zu den Optik-Strukturen der Gläser der Fahrzeugleuchten als Negativ-Profil in der Profilkörperrückseite ausgebildet ist. Die Ausbildung der Optik-Struktur in dem Profilkörper als Negativprofil macht es möglich, daß die Tiefzieh-Formen das Positiv-Profil aufweisen können, wodurch der zum Tiefziehen erforderliche Unterdruck unterhalb des tiefzuziehenden Materials leichter und mit weniger Aufwand aufgebaut werden kann und darüber hinaus hierdurch eine durchgehend glatte Oberfläche des Profilkörpers herstellbar ist.

Vorteilhafte Ausbildungen der Erfindung sind in den Unteransprüchen enthalten. Anhand des in den beiliegenden Zeichnungen dargestellten Ausführungsbeispiels wird die Erfindung näher erläutert.

Es zeigen:

Fig. 1 eine perspektivische Ansicht eines erfindungsgemäßen Formelemtes,

Fig. 2 einen Schnitt entlang der Schnittlinne II-II in Fig. 1 in vergrößertem Maßstab.

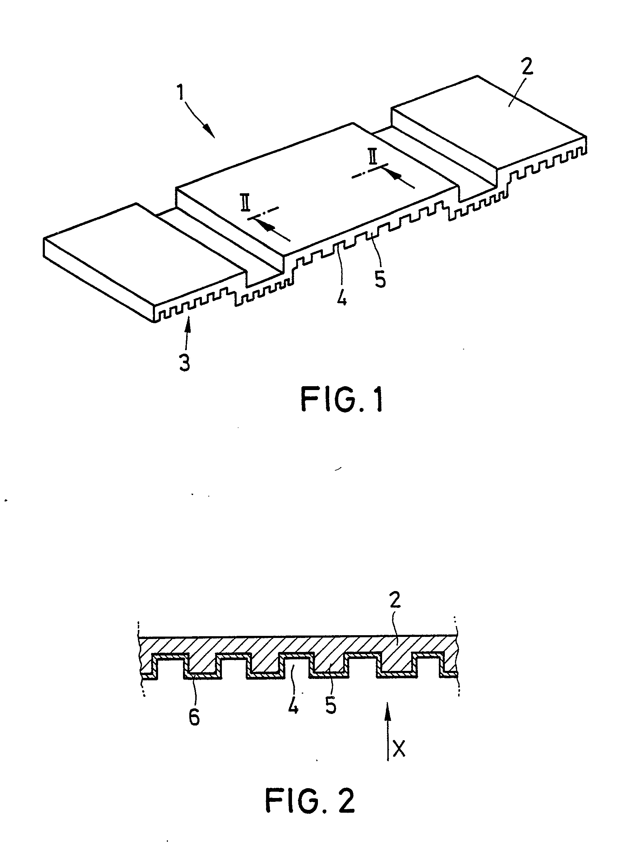

Wie in Figur 1 gezeigt, kann ein erfindungsgemäßes Formelement 1 als langgestreckter Profilkörper 2 mit etwa in der Projektion rechteckiger Grundfläche ausgebildet sein. Dieser Profilkörper kann durchgehend eben oder aber auch, wie dargestellt, Absätze, Stufen, Vertiefungen, Erhebungen oder dergleichen aufweisen. Auch sind andere Formgebungen, beispielsweise kreisförmige, elliptische oder andere praktisch beliebige Grundformen realisierbar. Der Profilkörper 2 besteht aus einem tiefziehbaren, thermoplastischen Kunststoffmaterial. In diesem Profilkörper 2 ist eine Optik-Struktur 3 ausgebildet. Diese Optik-Struktur 3 besteht aus einer Vielzahl von Vertiefungen 4 und Verbindungsstegen 5 zwischen den jeweiligen Vertiefungen. Damit ist gemäß der Erfindung die Optik-Struktur im Profilkörper 2 als Negativprofil ausgebildet, wenn sie von der Rückseite des Profilkörpers 2, siehe Pfeilrichtung X, betrachtet wird. Hierbei ist erfindungsgemäß jedoch trotz der im einlagigen Profilkörper 2 vorhandenen Struktur eine glatte Oberfläche des Profilkörpers vorhanden. Die Materialstärke des erfindungsgemäßen Profilkörpers 2 beträgt vorzugsweise 3 bis 5 mm, doch sind auch Unter- und Überschreitungen dieser Materialstärke im Rahmen der Erfindung möglich. Die Optik-Struktur erstreckt sich dabei etwa bis ca. 60 % der Materialstärke, so daß sich jedenfalls eine genügend dicke, glatte Oberflächenschicht ausbilden kann.

Auf der Rückseite des Profilkörpers 2 ist eine Schicht 6 aus einem Kontrastlack aufgetragen, wodurch der transparente Profilkörper in seinem optischen Erscheinungsbild eine höhere Reflexion erhält, so daß die Optik-Struktur besser hervorgehoben wird. Hierbei liegt es im Rahmen der Erfindung, wenn der Profilkörper aus einem eingefärbten, transparenten Kunststoffmaterial gebildet ist. In diesem Fall ist es vorteilhaft, wenn die Kontrastlack-Schicht 6 silbrig bzw. gräulich eingefärbt ist, wodurch die optische Tiefenwirkung verbessert wird. Es liegt ebenfalls im Rahmen der Erfindung, wenn der Profilkörper selbst aus einem etwa glasklaren Material besteht, wobei dann der Kontrastlack entsprechend der gewünschten Einfärbung farblich ausgeführt ist. Dabei kann ein einheitlich farbiger Kontrastlack gewählt werden, oder aber es können auch bereichsweise Kontrastlack-Schichten mit unterschiedlicher Farbgebung aufgetragen werden.

Erfindungsgemäß wird somit ein Tiefzieh-Formelement mit Optik-Struktur geschaffen, das sich durch einen gleichmäßigen inneren Strukturaufbau, eine gute räumliche Tiefenwirkung der optischen Struktur sowie durch ein reduziertes Gewicht und durch verringerte Herstellkosten auszeichnet.

## Ansprüche

1. Tiefzieh-Formelement mit Optik-Struktur, **gekennzeichnet durch** einen einlagigen Profilkörper (2), in dessen Rückseite, von dieser aus gesehen, die Optik-Struktur als Negativprofil ausgebildet ist sowie die Rückseite des Profilkörpers (2) mit einem Kontrastlack (6) beschichtet ist.

2. Formelement nach Anspruch 1, **dadurch gekennzeichnet,** daß der Profilkörper (2) aus einem tiefziehfähigen, thermoplastischen Kunststoff besteht.

3. Formelement nach Anspruch 1 oder 2, **dadurch gekennzeichnet,** daß die Wandstärke des Profilkörpers (2) mindestens 3 mm beträgt.

4. Formelement nach einem oder mehreren der Ansprüche 1 bis 3, **dadurch gekennzeichnet,** daß der Profilkörper (2) aus transparentem Material besteht.

5. Formelement nach einem oder mehreren der Ansprüche 1 bis 4, **dadurch gekennzeichnet,** daß die Kontrastlack-Schicht (6) über die gesamte Rückseitenfläche des Profilkörpers (2) einfarbig ist.

6. Formelement nach einem oder mehreren der Ansprüche 1 bis 4, **dadurch gekennzeichnet,** daß auf der Rückseitenfläche des Profilkörpers (2) Bereiche mit unterschiedlich farbiger Kontrastlack-Schicht ausgebildet sind.

7. Formelement nach einem oder mehreren der Ansprüche 1 bis 6, **dadurch gekennzeichnet,** daß die Optikstruktur (3) im gesamten Profilkörper (2) gleichförmig ist.

8. Formelement nach einem oder mehreren der Ansprüche 1 bis 6, **dadurch gekennzeichnet,** daß im Profilkörper (2) Bereiche mit verschiedener Optikstruktur ausgebildet sind.

9. Formelement nach einem oder mehreren der Ansprüche 1 bis 8, **dadurch gekennzeichnet,** daß die Tiefe der Optikstruktur (3) etwa 60 % der Stärke des Profilkörpers beträgt.

FIG. 1

FIG. 2